(19) Europäisches Patentamt
European Patent Office
Office européen des brevets

(11) **EP 1 391 333 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**15.10.2014 Patentblatt 2014/42**

(45) Hinweis auf die Patenterteilung:
**28.02.2007 Patentblatt 2007/09**

(21) Anmeldenummer: **03015236.7**

(22) Anmeldetag: **22.07.2003**

(51) Int Cl.:
***B60G 21/055*** (2006.01)

(54) **Gummi/Metall-Lager zur Anlenkung eines Stabilisators an einem Kraftfahrzeug**

Rubber and metal bush for mounting a stabiliser bar on a vehicle

Palier métal-caoutchouc pour monter une barre stabilisatrice d'un véhicule

(84) Benannte Vertragsstaaten:
**AT BE BG CH CY CZ DE DK EE ES FI FR GB GR HU IE IT LI LU MC NL PT RO SE SI SK TR**

(30) Priorität: **21.08.2002 DE 10239193**

(43) Veröffentlichungstag der Anmeldung:
**25.02.2004 Patentblatt 2004/09**

(73) Patentinhaber: **VORWERK AUTOTEC GmbH & Co. KG**
**42287 Wuppertal (DE)**

(72) Erfinder: **Krajewski, Andreas**
**58332 Schwelm (DE)**

(74) Vertreter: **Nunnenkamp, Jörg et al**
**Andrejewski - Honke**
**Patent- und Rechtsanwälte**
**An der Reichsbank 8**
**45127 Essen (DE)**

(56) Entgegenhaltungen:
WO-A1-01/55615    DE-C1- 3 903 350
DE-U1- 8 901 525    FR-A- 2 766 249
US-A- 5 080 334    US-B1- 6 241 225

- W. BEITZ ET AL.: 'Dubbel Taschenbuch für den Maschinenbau', Bd. 18, SPRINGER VERLAG, BERLIN Seiten G59 - G63
- W. STAUDT: 'Kraftfahrzeug Technik Technologie', 1995, VIEWEG VERLAG Seite 374

EP 1 391 333 B2

**Beschreibung**

Die Erfindung betrifft ein Gummi/Metall-Lager zur Anlenkung eines Stabilisators an einem Kraftfahrzeugaufbau, mit einem den Stabilisator umschließenden Gummikörper mit zwei oder mehr Gummikörperteilen, ferner mit einer Zwischenschale in dem Gummikörper, und mit einer an dem Kraftfahrzeugaufbau befestigbaren Buchse zur Aufnahme des Gummikörpers und des darin geführten Stabilisators, wobei der Querschnitt des Stabilisators den Querschnitt der den Stabilisator aufnehmenden Bohrung im Gummikörper um ein die Vorspannung vorgebendes Maß überdeckt.

Dokument FR 2766249 offenbart ein Gummi/Metal-Lager

Ein Gummi/Metall-Lager der eingangs beschriebenen Gestaltung wird im Rahmen der DE 698 04 170 T2 beschrieben. Hier wird die metallische Bewehrung bzw. Zwischenschale bei der Montage des Lagers auf dem Stabilisator unter Überschreitung der Elastizitätsgrenze des Metalls verformt. Dadurch soll das Lager die Form beibehalten, in welche es bei der Montage gebracht worden ist, und zwar trotz der vom Gummi aufgebrachten Rückstellkräfte. Auf diese Weise hat man in der Vergangenheit versucht, auf eine zusätzliche Fixierung zwischen Gummi und Stabilisator verzichten zu können.

Zum Stand der Technik gehört darüber hinaus ein Gummi/Metall-Lager nach der EP 0 911 195 A2. Vergleichbare Ausführungsformen wie dort beschrieben sind Gegenstand der in dem vorgenannten Dokument referierten Literaturstellen.

Solche Gummi/Metall-Lager haben sich grundsätzlich bewährt, sind jedoch kritisch in zweierlei Hinsicht. Zunächst einmal sorgt die Verbindung des Innern des Gummikörpers mit dem Stabilisator unter Umständen für Quietschgeräusche, die auf ein Durchrutschen des Stabilisators im Vergleich zum Gummikörper zurückzuführen sind. Das gilt insbesondere nach längeren Laufzeiten.

Hinzu kommt, dass man üblicherweise unterschiedliche Federraten und damit zusammenhängend variierende Federhärten des Gummi/Metall-Lagers benötigt, und zwar einerseits in radialer Richtung und andererseits im Zuge einer Torsion des Gummikörpers. Hier hat es bisher im Stand der Technik zwar Ansätze gegeben, die jedoch nicht rundherum zu überzeugen vermögen.

Das gilt insbesondere für die DE 698 04 170 T2, welche trotz der gleichsam plastischen Verformung der Zwischenschale nicht mit letzter Sicherheit dafür sorgen kann, dass nicht Relativbewegungen zwischen dem Stabilisator und dem Gummi/Metall-Lager stattfinden. Auch kann die Lagersteifigkeit in radialer Richtung nicht überzeugen. Das lässt sich im Kern darauf zurückführen, dass der zwischen der Zwischenschale und der äußeren Buchse gebildete Gummiring wie auch der Gummiring zwischen der Zwischenschale und dem Stabilisator durch die erhebliche Vorspannung in der betreffenden Radialrichtung nur unzulänglich komprimiert werden. Denn beide Gummiringe sind wegen ihrer nur einseitigen Fixierung an der Zwischenschale in der Lage, in Axialrichtung auszuweichen, so dass letztlich die gewünschten Federraten in Radialrichtung nicht erreicht werden. Hier will die Erfindung insgesamt Abhilfe schaffen.

Der Erfindung liegt das technische Problem zugrunde, ein Gummi/Metall-Lager der eingangs beschriebenen Ausgestaltung so weiterzuentwickeln, dass die vorerwähnten Quietschgeräusche unterbunden werden und sich unterschiedliche Federraten bei konstruktiv einfachem Aufbau realisieren lassen.

Zur Lösung dieser technischen Problemstellung ist Gegenstand der Erfindung ein Gummi/Metall-Lager nach Anspruch 1. Danach verfügt der zwischen beiden Schalen befindliche Gummiring also über eine zweischichtige Verbindung, einerseits mit der Zwischenschale und andererseits mit der Umfangschale.

Dabei können die Zwischenschale und die Umfangsschale jeweils aus Metall, Kunststoff oder vergleichbar harten Werkstoffen sowie Kombination derselben hergestellt sein. Üblicherweise umgibt die Umfangsschale die Zwischenschale von außen und ist ihrerseits mit Gummi überzogen. Selbstverständlich ist es im Rahmen der Erfindung auch möglich, dass die Zwischenschale die Umfangsschale umgibt.

Jedenfalls wird durch die Erfindungsmaßnahmen erreicht, dass Torsionen unverändert zugelassen werden, weil in der Torsionsrichtung die Zwischenschale keine Wirkung entfaltet. Die Torsionsfederrate hängt primär von den Materialeigenschaften des verwendeten Gummis ab. Gleichzeitig sorgt die Zwischenschale mit den beiden bereits beschriebenen und in etwa gleich starken Gummiringen dafür, dass eine erhöhte Radialfederrate bei unveränderter oder zum Teil sogar verringerter Torsionsfederrate im Vergleich zu einem Gummikörper ohne Zwischenschale erreicht wird. In die gleiche Richtung wirkt die zweischichtige Verbindung des zwischen der Umfangsschale und der Zwischenschale befindlichen Gummiringes.

Denn diese stellt sicher, dass der betreffende Gummiring infolge der Vorspannung gleichsam axial in Stabilisatorlängsrichtung nicht ausweichen kann, sondern vielmehr eine geringfügige tonnenartige Ausbauchung erfährt, ohne dass sich die jeweilige Kontaktfläche zwischen dem Gummiring und der Zwischenschale respektive der Umfangsschale größenmäßig verändert. Das ist der entscheidende Unterschied zu der DE 698 04 170 T2, die ein solches axiales Auswandern des Gummiringes zumindest einseitig zulässt.

Weil der besagte Gummiring zwischen der Zwischenschale und der Umfangsschale zweischichtig gebunden ist und sich somit die jeweilige Kontaktfläche nicht ändert, können die durch die Vorspannung aufgebauten intramolekularen Kräfte im Gummiring vorteilhaft in der Weise genutzt werden, dass die Radialfederrate - wie beschrieben - gegenüber bisherigen Ausführungsformen deutlich ansteigt. An der Torsionsfähigkeit des beschriebenen Gummi/Metall-Lagers ändert sich hingegen nichts, diese wird unter Umständen sogar infolge der Vorspannung und der zweischichtigen Verbindung begünstigt. Hierin sind die wesentlichen Vorteile zu sehen.

Das Maß der Überdeckung zwischen dem Querschnitt des Stabilisators und dem Querschnitt der den Stabilisator aufnehmenden Bohrung bzw. die Flächenüberdeckung beträgt mehr als 20 % und in der Regel weniger als 100 %. Das heißt, die Querschnittsfläche des Stabilisators ist im Bereich des ihn aufnehmenden Gummikörpers um mehr als 20 %, größer als die von der Bohrung umschlossene Querschnittsfläche ohne Stabilisator.

Für den Fall, dass der Stabilisator und die Bohrung jeweils kreisförmig ausgebildet sind, lassen sich zugehörige Durchmesserverhältnisse angeben. So hat es sich als vorteilhaft erwiesen, wenn der Durchmesser des Stabilisators denjenigen der Bohrung um ca. 5 %, vorzugsweise um mehr als 10 %, übertrifft. Dabei kann der Durchmesser des Stabilisators maximal 40 % größer als der Durchmesser der Bohrung gestaltet sein. So oder so wird durch die beschriebene Überdeckung zwischen dem Stabilisator und der Bohrung eine starke Vorspannung bei der Montage des Gummikörpers am Stabilisator erreicht. Diese sorgt dafür, dass Relativbewegungen zwischen dem Gummikörper bzw. Gummilager und dem Stabilisator sowohl in axialer als auch torsionaler Richtung verhindert werden. Das vom Stand der Technik bisher nicht beherrschbare Quietschen infolge eines Durchrutschens des Gummikörpers im Vergleich zum Stabilisator tritt also nicht (mehr) auf.

Bei der Zwischenschale handelt es sich - wegen der hauptsächlich gegebenen Zweiteiligkeit des Gummikörpers - regelmäßig um zwei Metallhalbschalen, die den Gummikörper radial in die zwei in etwa gleichstarken Gummiringe unterteilen.

Beide Gummiringe sind üblicherweise aus einem übereinstimmenden Gummimaterial mit gleich Federeigenschaft gefertigt, wenngleich natürlich auch unterschiedliche Gummimaterialien an dieser Stelle zum Einsatz kommen mögen.

Sofern der innere Gummiring zwischen der Zwischenschale und dem Stabilisator ergänzend noch mit dem Stabilisator beispielsweise adhäsiv verbunden ist, ergeben sich für diesen Gummiring ergänzend die gleichen Vorteile wie für den Gummiring, welcher von der Zwischenschale und der Umfangsschale eingehaust wird. Das heißt, auch der erstgenannte Gummiring verfügt wegen der zweischichtigen Verbindung einerseits mit der Stabilisatoroberfläche und andererseits mit der Zwischenschale über eine ausgeprägt große Radialfederrate bei unveränderter Torsionsfederrate. Dadurch lassen sich die positiven Wirkungen des bereits beschriebenen Gummiringes zwischen der Zwischenschale und der sie umgebenden Umfangsschale noch einmal infolge des weiteren und ähnlich festgelegten Gummirings zwischen der Zwischenschale und dem Stabilisator steigern.

Dabei geht die Erfindung insgesamt von der Erkenntnis aus, dass die Eigenschaft von Gummi zum Federn wesentlich durch ein räumliches Ausweichen der langkettigen Moleküle bestimmt wird. In Radialrichtung sorgt nun der zweischichtige Aufbau und die damit verbundene Trennung der beiden Schichten bzw. gleichstarken Gummiringe durch die eingelegte metallische Zwischenschale zum einen dafür, dass entsprechende Dehnungen und Stauchungen in dieser Radialrichtung nicht mehr in dem Maße möglich sind, wie dies bei einem Gummikörper ohne Zwischenschale der Fall wäre. Zum andern wirkt die zweischichtige Verbindung des zumindest einen Gummiringes mit der Zwischenschale und der Umfangsschale in die gleiche Richtung, und zwar dergestalt, dass der betreffende Gummiring axial kaum ausweichen kann und folgerichtig sich die langkettigen Moleküle nur begrenzt verschieben können. Beide Maßnahmen haben zur Folge, dass das erfindungsgemäße Gummi/Metall-Lager radial härter ausgelegt ist als ein vergleichbares Lager ohne Zwischenschale, folglich über die bereits beschriebene erhöhte Radialfederrate verfügt.

Dagegen werden Torsionen unverändert zugelassen, weil in der Torsionsrichtung die Zwischenschale und auch die jeweilige Verbindung des Gummiringes mit der Zwischenschale und der Umfangsschale keine Wirkung entfaltet. Vielmehr hängt die Torsionsfederrate primär von den Materialeigenschaften des verwendeten Gummis ab.

Um nun schließlich ein Auswandern des Gummi/Metall-Lagers bei axialer Belastung aus der Buchse bzw. in axialer Richtung im Vergleich zum Stabilisator zu verhindern, verfügt der Gummikörper über außenseitige Aus- und/oder Einformungen, die in Verbindung mit korrespondierenden Ein- und/oder Ausformungen in der Buchse entsprechende Axialbewegungen des Gummi/Metall-Lagers bzw. des Gummikörpers im Vergleich zum Stabilisator unterbinden.

Denn zwischen diesen Ein- und/oder Ausformungen einerseits außenseitig am Gummikörper und andererseits innenseitig in der Buchse findet ein Form- und/oder Kraftschluss statt, der die genannten Axialbewegungen unterbindet. Dabei hat es sich als vorteilhaft erwiesen, beispielsweise den Gummikörper an seiner Außenseite mit einer oder mehreren umlaufenden Gummiwülsten auszurüsten, die in entsprechend geformte Sicken in der Buchse form- und/oder kraftschlüssig eingreifen. Ebenso ist es möglich, außenseitig des Gummikörpers Riffeln mit Nuten und Erhebungen vorzusehen, die für die gewünschte Festlegung in Axialrichtung mit zugehörigen Riffeln bzw. Nuten und Erhebungen in der Buchse zusammenwirken.

Die beiden Gummikörperteile können getrennt voneinander oder zusammen gefertigt werden. Das hängt von dem Einsatzzweck ab. Bei Gummikörperteilen für ein Hinterachsstabilisatorlager greift man in der Regel auf eine einteilige Lösung zurück, während die Gummikörperteile für ein Vorderachsstabilisatorlager getrennt gefertigt werden und unverändert zwei verschiedene Teile formen.

Dementsprechend sind die Gummikörperteile bei einem Hinterachsstabilisatorlager im Wesentlichen symmetrisch zu einer Trennebene ausgebildet und werden mit Hilfe eines Filmscharniers zusammengehalten. Dagegen formen die beiden Gummikörperteile bei einem Vorderachsstabilisatorlager zwei im Vergleich zu der genannten Trennebene asymmetrisch ausgebildete Teile.

Im Ergebnis wird ein Gummi/Metall-Lager zur Verfügung gestellt, dessen Gummikörper eine Trennung durch die Zwischenschale erfährt und folglich zweischichtig ausgebildet ist. Dadurch stellt sich eine geringe Torsionsfederrate sowie eine hohe Radialfederrate wie beschrieben ein. Infolge der erfindungsgemäß realisierten Überdeckung zwischen einerseits dem Stabilisator und andererseits der Bohrung in dem Gummikörper wird eine starke Vorspannung bei der Montage erzielt. Diese stellt sicher, dass das primär für das Quietschen eines Stabilisatorlagers verantwortliche Durchrutschen auf dem Stabilisator unterbunden wird.

Immer erfolgt die Vorspannung in Abhängigkeit von der Geometrie der inneren Gummispur bzw. der den Stabilisator aufnehmenden Bohrung und verhindert zuverlässig eine Relativbewegung zwischen dem Gummilager insgesamt bzw. dem Gummikörper und dem Stabilisator in axialer und torsionaler Richtung. Das gilt sowohl bei niedrigen als auch hohen Temperaturen, so dass eine Geräuschentwicklung nicht stattfindet.

Als Gummi für die Herstellung mag ein Naturkautschuk mit einer Shore-A-Härte von ca. 20 bis 100, vorzugsweise 60 zum Einsatz kommen. Ein solcher Naturkautschuk lässt Torsionswinkel des Stabilisators im Bereich von etwa 10° bis 60° durch intramolekulare Federkräfte zu.

Im Folgenden wird die Erfindung anhand einer lediglich ein Ausführungsbeispiel darstellenden Zeichnung näher erläutert; es zeigen:

Fig. 1    eine schematische Ansicht des erfindungsgemäßen Gummi/Metall-Lagers in einer ersten Variante als Hinterachsstabilisatorlager,

Fig. 2    den Gegenstand nach Fig. 1 in einer zweiten Variante als Vorderachsstabilisatorlager und

Fig. 3    einen schematischen Schnitt durch die Figuren im Bereich der Bohrung zur Aufnahme des Stabilisators, um die die Vorspannung vorgebende Überdeckung darzustellen.

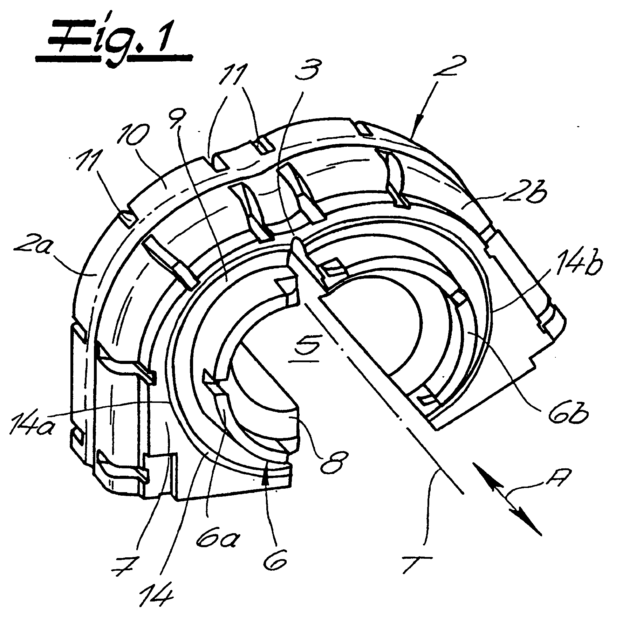

In den Figuren ist ein Gummi/Metall-Lager zur Anlenkung eines Stabilisators 1 an einem Kraftfahrzeugaufbau gezeigt. Zur Verdeutlichung der Topologie und Anbringung des betreffenden Lagers an einem Kraftfahrzeugaufbau wird insofern Bezug genommen auf die Fig. 1 der eingangs bereits angegeben EP 0 911 195 A2.

Der Stabilisator 1 wird von einem zweiteiligen Gummikörper 2 umschlossen, welcher sich aus zwei Gummikörperteilen 2a, 2b zusammensetzt. Im Rahmen des Ausführungsbeispiels nach Fig. 1 sind die beiden Gummikörperteile 2a, 2b im Vergleich zu einer Trennebene T des Gummikörpers 2 symmetrisch ausgebildet. Beide Gummikörperteile 2a, 2b werden mit Hilfe eines Filmscharniers 3 zusammengehalten, so dass die Fertigung in einem einzigen Spritzgießvorgang gelingt.

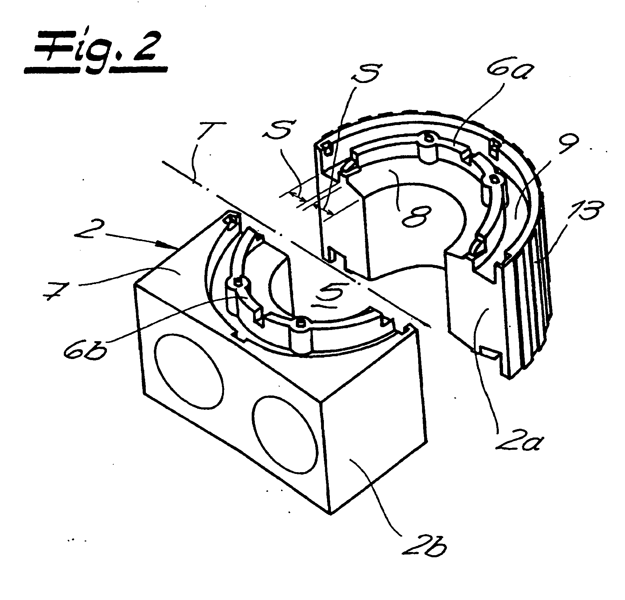

Dagegen sind die beiden Gummikörperteile 2a, 2b bei der Variante nach Fig. 2 im Vergleich zu der besagten Trennungsebene T asymmetrisch ausgebildet und verfügen auch nicht über das zuvor angegebene Filmscharnier 3. Zur Herstellung der beiden ungleichen Gummikörperteile 2a, 2b sind folgerichtig zwei verschiedene Spritzgießwerkzeuge erforderlich.

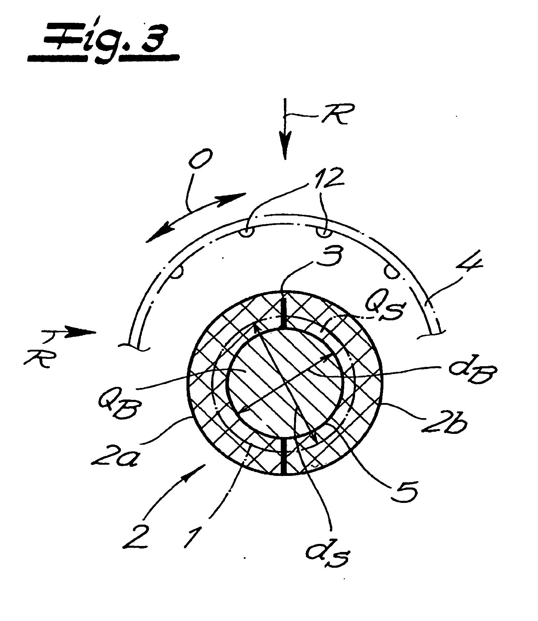

Der Gummikörper 2 wird in einer lediglich in Fig. 3 angedeuteten Buchse 4 aufgenommen und mit Hilfe dieser Buchse 4 am nicht dargestellten Kraftfahrzeugaufbau befestigt. Mit Hilfe der Buchse 4 wird der Gummikörper 2 mit der erforderlichen Vorspannung - den Stabilisator 1 umschließend - an diesem befestigt.

Zur Einstellung der Vorspannung überdeckt der Querschnitt $Q_S$ des Stabilisators 1 einen zugehörigen Querschnitt $Q_B$ einer den Stabilisator 1 aufnehmenden Bohrung 5 des Gummikörpers 2 um ein vorgegebenes Maß. Dieses vorgegebene Maß der Überdeckung, d.h. der Unterschied zwischen der Querschnittsfläche $Q_S$ im Vergleich zu $Q_B$ mit $Q_S > Q_B$ beträgt im Rahmen des Ausführungsbeispiels ca. 20 %. Es gilt also $Q_S \approx 1,2 \times Q_B$.

Da der Stabilisator 1 und die Bohrung 5 jeweils kreisförmig ausgebildet sind, korrespondiert die beschriebene Überdeckung von ca. 20 % zu einem Durchmesser $d_S$ des Stabilisators 1, welcher den Durchmesser $d_B$ der Bohrung 5 um ca. 10 % übertrifft. Das erklärt sich aufgrund der quadratischen Abhängigkeit der jeweiligen Querschnittsflächen $Q_S$, $Q_B$ vom zugehörigen Durchmesser $d_S$, $d_B$. Aus $d_S \approx 1,1 \times d_B$ folgt dementsprechend $Q_S \approx 1,2 \times Q_B$.

Maximal kann der Durchmesser $d_S$ des Stabilisators 1 Werte annehmen, die um ca. 40 % größer sind als diejenigen des Durchmesser $d_B$ der Bohrung. Es gilt also $d_S \leq 1,4 \times d_B$ und insgesamt $1,05 \times d_B \leq d_S \leq 1,4 \times d_B$. Für die Querschnittsfläche ergibt sich hieraus

$$1,1 \times Q_B \leq Q_S \leq 2,0 \times Q_B.$$

Anhand der Fig. 1 und 2 erkennt man, dass der Gummikörper 2 jeweils eine Zwischenschale 6 aus zwei Metallhalbschalen 6a, 6b aufweist. Dabei gehört die Metallhalbschale 6a zum Gummikörperteil 2a, während sich die Metallhalbschale 6b im Gummikörperteil 2b findet.

Die Fig. 1 und 2 zeigen ferner, dass die Zwischenschale 6 bzw. die beiden Metallhalbschalen 6a, 6b eine jeweilige Seitenfläche 7 des Gummikörpers 2 axial überragen. Auch die Buchse 4 wird von der Zwischenschale 6 in Seitenansicht jeweils überragt. Die Zwischenschale 6 bzw. die beiden Metallhalbschalen 6a, 6b unterteilen den Gummikörper 2 radial in zwei in etwa gleich starke Gummiringe 8, 9. Das heißt, beide Gummiringe 8, 9 verfügen über in etwa die gleich Stärke s.

Beide Gummiringe 8, 9 sind - wie der übrige Gummikörper 2 - aus einem übereinstimmenden Gummimaterial mit gleichen Federeigenschaften gefertigt. Im Rahmen des Ausführungsbeispiels kommt hier ein Elastomer auf Gummi- oder Kunststoffbasis zum Einsatz. Bei dem Elastomer handelt es sich im Rahmen des gezeigten Beispiels um Naturkautschuk (NR) mit einem Anwendungsbereich von ca. -50°C bis +90°C, einer Shore-A-Härte von ca. 20 bis 100, vorzugsweise 60, einer Reißdehnung von 100 % bis 800 %, vorzugsweise mehr als 400 %, und einer Dichte von etwa 1,5 g/cm³.

Anhand der Fig. 1 wird deutlich, dass der Gummiring 9 bzw. die beiden Gummiringe 9 jeweils zwischen der Zwischenschale 6 und einer weiteren in den Gummikörper 2 eingebetteten Umfangsschale 14 angeordnet sind. Diese Umfangsschale 14 aus zwei Metallschalen 14a, 14b ist in der Fig. 1 nur angedeutet und mit einer Gummischicht überzogen. Das gleiche gilt für die Zwischenschale 6.

Im Gegensatz zu der Zwischenschale 6 steht die Umfangsschale 14 in axialer Richtung nicht über das dargestellte Gummi/Metall-Lager über. Der Gummiring 9 ist mit jeweils beiden Schalen 6, 14 adhäsiv verbunden. Das kann durch Kleben erfolgen. Vorteilhafterweise wird man hier jedoch auf einen Gummi/Metall-Spritzvorgang zurückgreifen. Das heißt, der Gummiring 9 wird durch Kunststoffspritzen zwischen die beiden Schalen 6, 14 gebracht und erfährt hierdurch gleichzeitig die erforderliche adhäsive Verbindung mit beiden Schalen 6, 14. Der Gummiring 9 erstreckt sich dabei ergänzend radial über die Umfangsschale 14 hinaus in Richtung der Buchse 4. Das ist insbesondere in Fig. 2 zu erkennen, wo man die in den Gummiring 9 eingebettete Umfangsschale 14 nicht sieht. Insofern versteht es sich, dass der Gummiring 9 beidseitig mit der Umfangsschale 14 verbunden ist.

Auf diese Weise wird erreicht, dass der Gummiring 9 in Verbindung mit der aufgebrachten Vorspannung nicht in axialer Richtung A im montierten Zustand ausweichen kann, sondern sich vielmehr geringfügig an den Rändern ballig verformt. Das hat zur Folge, dass die langkettigen Molekülketten im Innern des Gummiringes 9 infolge der Vorspannung radial und axial praktisch nicht ausweichen können, so dass das Gummi/Metall-Lager in radialer Richtung R (vgl. Fig. 3) gegenüber einem Gummikörper 2 ohne Zwischenschale 6 und Umfangsschale 14 deutlich "härter" ist, also eine vergrößerte Radialfederrate aufweist.

In torsionaler Richtung O (vgl. Fig. 3) wird dagegen keine Verhärtung beobachtet, weil weder die Zwischenschale 6, noch die zweischichtige Verbindung des Gummiringes 9 einerseits mit der Zwischenschale 6 und andererseits mit der Umfangsschale 14 ein Ausweichen der langkettigen Molekülketten in dieser Richtung behindert. Dieser Effekt wird durch die Zwischenschale 6 noch verstärkt, wie eingangs bereits beschrieben worden ist.

Nicht dargestellt ist die Möglichkeit, zusätzlich den Gummiring 8, welcher dem Stabilisator 1 am nächsten ist, mit diesem adhäsiv zu verbinden. Dadurch können für den Gummiring 8 die gleichen Wirkungen wie für den Gummiring 9 geltend gemacht werden. Denn in einem solchen Fall ist der Gummiring 8 - wie der Gummiring 9 - zweischichtig verbunden, und zwar einerseits mit dem Stabilisator 1 und andererseits mit der Zwischenschale 6.

Insgesamt ist der Gummikörper 2 für den Einsatz in einem Kraftfahrzeug geradezu prädestiniert, zumal Alterungseffekte nur eine untergeordnete Rolle spielen. Durch die realisierte Zwischenschale 6 und die zweischichtige Verbindung wenigstens des Gummiringes 9 mit der Umfangsschale 14 und der Zwischenschale 6 sowie gegebenenfalls des Gummiringes 8 mit dem Stabilisator 1 und der Zwischenschale 6 wird im Vergleich zu einem herkömmlichen Gummikörper 2 eine erhöhte Radialfederrate bei unveränderter Torsionsfederrate erreicht. Das bedeutet, dass das beschriebene Gummi/Metall-Lager in radialer Richtung R "härter" als die Ausführungsformen in der Vergangenheit ist, während in torsionaler Richtung O keine Verhärtung beobachtet wird.

Das ist gewünscht, denn das Gummi/Metall-Lager soll sich in radialer Richtung R gleichsam wie ein Festlager verhalten aber in torsionaler Richtung O die Bewegungen des Stabilisators 1 aufnehmen.

Man erkennt insbesondere anhand der Fig. 1 und 2, dass der Gummikörper 2 mit außenseitigen Aus- und/oder Einformungen 10, 11 ausgerüstet ist. Tatsächlich verfügt die Variante zur Anbringung an einer Hinterachse nach Fig. 1 über eine bzw. zwei umlaufende Gummiwülste 10 als Ausformungen 10 sowie zusätzlich über nutartige Einformungen 11. Hierzu korrespondieren in Fig. 3 lediglich angedeutete Sicken 12 in der Buchse 4.

Bei dem Ausführungsbeispiel zur Anbringung an der Vorderachse gemäß Fig. 2 findet sich außenseitig des Gummikörpers 2 eine Riffelung 13, die in der zugehörigen Buchse 4 auf ihren entsprechenden Gegenpart trifft. In beiden Fällen sorgen die Ein-/Ausformungen 10, 11, 13 am Gummikörper 2 dafür, dass in Verbindung mit den korrespondierend ausgebildeten Ein-/Ausformungen 12 in der Buchse 4 Bewegungen des Gummi/Metall-Lagers im Vergleich zum Stabilisator 1 in Axialrichtung A (vgl. Fig. 1) unterbunden werden.

Beide Gummikörper 2a, 2b lassen sich getrennt voneinander fertigen, wie dies in der Fig. 2 dargestellt ist. Daneben ist aber auch eine einzügige Fertigung beider Gummikörper 2a, 2b möglich, wie sie im Rahmen der Fig. 1 mit dem die beiden Gummikörper 2a, 2b verbindenden Filmscharnier 3 dargestellt ist.

**Patentansprüche**

**1.** Gummi/Metall-Lager zur Anlenkung eines Stabilisators (1) an einem Kraftfahrzeugaufbau, mit

    - einem den Stabilisator (1) umschließenden Gummikörper (2) mit zwei oder mehr Gummikörperteilen (2a, 2b), ferner mit
    - einer Zwischenschale (6) in dem Gummikörper (2), und mit
    - einer am Kraftfahrzeugaufbau befestigbaren Buchse (4) zur Aufnahme des Gummikörpers (2) und des darin geführten Stabilisators (1),

wobei der Querschnitt ($Q_S$) des Stabilisators (1) den Querschnitt ($Q_B$) der den Stabilisator (1) aufnehmenden Bohrung (5) im Gummikörper (2) um ein die Vorspannung vorgebendes Maß überdeckt,
wobei ferner das Maß der Überdeckung zwischen dem Querschnitt ($Q_S$) des Stabilisators (1) und dem Querschnitt ($Q_B$) der den Stabilisator (1) aufnehmenden Bohrung (5) mehr als 20 % und weniger als 100 % beträgt,
wobei zusätzlich zu der Zwischenschale (6) eine weitere in den Gummikörper (2) eingebettete Umfangsschale (14) vorgesehen ist, und
wobei ein zwischen den beiden Schalen (6, 14) befindlicher Gummiring (9) des Gummikörpers (2) jeweils mit beiden Schalen (6, 14) verbunden ist.

2.    Gummi/Metall-Lager nach Anspruch 1, **dadurch gekennzeichnet, dass** die Zwischenschale (6) und die Umfangsschale (14) aus Metall, Kunststoff oder vergleichbaren Werkstoffen sowie Kombinationen hiervon hergestellt sind.

3.    Gummi/Metall-Lager nach Anspruch 1 oder 2, **dadurch gekennzeichnet, dass** die Umfangsschale (14) die Zwischenschale (6) außen umgibt.

4.    Gummi/Metall-Lager nach einem der Ansprüche 1 bis 3, **dadurch gekennzeichnet, dass** der Durchmesser ($d_S$) des Stabilisators (1) um maximal 40 % größer als der Durchmesser ($d_B$) der Bohrung (5) ausgebildet ist.

5.    Gummi/Metall-Lager nach einem der Ansprüche 1 bis 4, **dadurch gekennzeichnet, dass** die Zwischenschale (6) den Gummikörper (2) seitlich überragt.

6.    Gummi/Metall-Lager nach Anspruch 5, **dadurch gekennzeichnet, dass** die Zwischenschale (6) den Gummikörper (2) radial in zwei in etwa gleich starke Gummiringe (8, 9) unterteilt.

7.    Gummi/Metall-Lager nach Anspruch 6, **dadurch gekennzeichnet**, das die beiden Gummiringe (8, 9) aus übereinstimmendem Gummimaterial mit gleichen Federeigenschaften gefertigt sind, so dass der Gummikörper (2) mit der Zwischenschale (6) eine erhöhte Radialfederrate bei unveränderter Torsionsfederrate im Vergleich zu einem Gummikörper (2) ohne Zwischenschale (6) aufweist.

8.    Gummi/Metall-Lager nach einem der Ansprüche 1 bis 7, **dadurch gekennzeichnet, dass** der Gummikörper (2) außenseitige Aus- und/oder Einformungen (10, 11, 13) aufweist, die in Verbindung mit korrespondierenden Ein- und/oder Ausformungen (12) in der Buchse (4) Bewegungen des Gummikörpers (2) in Axialrichtung (4) im Vergleich zum Stabilisator (1) unterbinden.

9.    Gummi/Metall-Lager nach einem der Ansprüche 1 bis 8, **dadurch gekennzeichnet, dass** die beiden Gummikörperteile (2a, 2b) getrennt voneinander gefertigt werden und asymmetrisch zu einer Trennebene (T) ausgebildet sind oder einen gemeinsamen Körper (2a, 2b, 3) formen.

## Claims

1.    Rubber/metal bearing for articulating a stabiliser (1) on a motor vehicle structure, comprising

    - a rubber body (2) which surrounds the stabiliser (1) and comprises two or more rubber body parts (2a, 2b), furthermore comprising
    - an intermediate shell (6) in the rubber body (2), and comprising
    - a bushing (4) for receiving the rubber body (2) and the stabiliser (1) guided therein, which bushing can be fixed to the motor vehicle structure,

wherein the cross section ($Q_S$) of the stabiliser (1) overlaps the cross section ($Q_B$) of the bore (5) in the rubber body (2) which receives the stabiliser (1) by an amount that defines the prestress,
wherein the amount of the overlap between the cross section ($Q_S$) of the stabiliser (1) and the cross section ($Q_B$) of the bore (5) which receives the stabiliser (1) is more than 20% and less than 100%,
wherein in that, in addition to the intermediate shell (6), a further peripheral shell (14) which is embedded in the rubber body (2) is provided, and
wherein a rubber ring (9) of the rubber body (2) located between the two shells (6, 14) is respectively joined to both shells (6, 14).

2.    Rubber/metal bearing according to claim 1, **characterised in that** the intermediate shell (6) and the peripheral shell (14) are made from metal, plastic or comparable materials and combinations thereof.

3.    Rubber/metal bearing according to claim 1 or 2, **characterised in that** the peripheral shell (14) externally surrounds the intermediate shell (6).

**4.** Rubber/metal bearing according to one of claims 1 to 3, **characterised in that** the diameter (ds) of the stabiliser (1) is designed to be at most 40% larger than the diameter ($d_B$) of the bore (5).

**5.** Rubber/metal bearing according to one of claims 1 to 4, **characterised in that** the intermediate shell (6) protrudes laterally beyond the rubber body (2).

**6.** Rubber/metal bearing according to claim 5, **characterised in that** the intermediate shell (6) divides the rubber body (2) radially into two rubber rings (8, 9) of approximately equal thickness.

**7.** Rubber/metal bearing according to claim 6, **characterised in that** the two rubber rings (8, 9) are made from the same rubber material with equal spring properties, so that the rubber body (2) with the intermediate shell (6) has an increased radial spring rate but an unaltered torsional spring rate compared to a rubber body (2) without an intermediate shell (6).

**8.** Rubber/metal bearing according to one of claims 1 to 7, **characterised in that** the rubber body (2) has protrusions and/or recesses (10, 11, 13) on its outer side which, in conjunction with corresponding recesses and/or protrusions (12) in the bushing (4), prevent any movements of the rubber body (2) in the axial direction (A) compared to the stabiliser (1).

**9.** Rubber/metal bearing according to one of claims 1 to 8, **characterised in that** the two rubber body parts (2a, 2b) are made separately from one another and are designed asymmetrically with respect to a plane of separation (T) or form a common body (2a, 2b, 3).

## Revendications

**1.** Palier en caoutchouc-métal pour le montage en articulation d'un stabilisateur (1) sur une structure de véhicule automobile, comprenant :

> - un corps en caoutchouc (2) qui entoure le stabilisateur (1) par deux parties ou plus de corps en caoutchouc (2a, 2b), et comprenant en outre
> - une coque intermédiaire (6) dans le corps en caoutchouc (2), et comprenant
> - une douille (4) pouvant être fixée sur la structure de véhicule automobile pour réceptionner le corps en caoutchouc (2) et le stabilisateur (1) guidé dedans,

dans lequel la section transversale ($Q_S$) du stabilisateur (1) recouvre la section transversale ($Q_B$) du perçage (5) qui réceptionne le stabilisateur (1) dans le corps en caoutchouc (2), selon une mesure qui prescrit la pré-tension,

dans lequel, la mesure du recouvrement entre la section transversale ($Q_S$) du stabilisateur (1) et la section transversale ($Q_B$) du perçage (5) qui réceptionne le stabilisateur (1) se monte à plus de 20% et à moins de 100%, et

dans lequel une autre coque circonférentielle (14), noyée dans le corps en caoutchouc (2), est prévue en supplément à la coque intermédiaire (6), une bague en caoutchouc (9) du corps en caoutchouc (2), laquelle se trouve entre les deux coques (6, 14), étant reliée respectivement aux deux coques (6, 14).

**2.** Palier en caoutchouc-métal selon la revendication 1, **caractérisé en ce que** la coque intermédiaire (6) et la coque circonférentielle (14) sont fabriquées en métal, en matière plastique ou à partir de matériaux comparables, ainsi qu'à partir de combinaisons de ceux-ci.

**3.** Palier en caoutchouc-métal selon l'une ou l'autre des revendications 1 et 2, **caractérisé en ce que** la coque circonférentielle (14) entoure la coque intermédiaire (6) à l'extérieur.

**4.** Palier en caoutchouc-métal selon l'une des revendications 1 à 3, **caractérisé en ce que** le diamètre (ds) du stabilisateur (1) est réalisé au maximum de 40% plus grand que le diamètre ($d_B$) du perçage (5).

**5.** Palier en caoutchouc-métal selon l'une des revendications 1 à 4, **caractérisé en ce que** la coque intermédiaire (6) dépasse latéralement du corps en caoutchouc (2).

**6.** Palier en caoutchouc-métal selon l'une ou l'autre des revendications 5, **caractérisé en ce que** la coque intermédiaire (6) subdivise radialement le corps en caoutchouc (2) en deux bagues en caoutchouc (8, 9) d'une épaisseur approximativement identique.

**7.** Palier en caoutchouc-métal selon la revendication 6, **caractérisé en ce que** les deux bagues en caoutchouc (8, 9) sont fabriquées à partir d'un matériau caoutchouté concordant et présentant les mêmes propriétés élastiques, de telle sorte que le corps en caoutchouc (2) présente avec la coque intermédiaire (6) un taux d'élasticité radiale augmenté pour un taux d'élasticité à la torsion inchangé, en comparaison à un corps en caoutchouc (2) sans coque intermédiaire (6).

**8.** Palier en caoutchouc-métal selon l'une des revendications 1 à 7, **caractérisé en ce que** le corps en caoutchouc (2) présente sur le côté extérieur des moulures protubérantes ou creusées (10, 11, 13), lesquelles empêchent, en liaison avec des moulures protubérantes ou creusées correspondantes (12) dans la douille (4), des mouvements du corps en caoutchouc (2) en direction axiale (A), en comparaison au stabilisateur (1).

9. Palier en caoutchouc-métal selon l'une des revendications 1 à 8, **caractérisé en ce que** les deux parties de corps en caoutchouc (2a, 2b) sont fabriquées séparément l'une de l'autre et sont réalisées de manière asymétrique par rapport à un plan de séparation (T), ou forment un corps commun (2a, 2b, 3).

EP 1 391 333 B2

Fig.1

9

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2766249
- DE 69804170 T2
- EP 0911195 A2